# EUROPEAN PATENT APPLICATION

(11) **EP 1 862 974 A1**
(43) Date of publication of application: **05.12.2007**
(21) Application number: 06712200.2
(22) Date of filing: 23.01.2006
(51) Int. Cl.: G06T 15/50, A63F 13/00

(54) **IMAGE CREATING DEVICE, LIGHT ARRANGING METHOD, RECORDING MEDIUM, AND PROGRAM**

(30) Priority: 25.01.2005 JP 2005017225
(71) Applicant: Konami Digital Entertainment Co., Ltd., Minato-ku Tokyo 107-8324 (JP)
(72) Inventor: NAGAYAMA, Kentaro, c/o Konami Digital Enternainment Co., Ltd., Minato-ku, Tokyo 107-8324 (JP); KOHIRA, Toshio, c/o Konami Digital Enternainment Co., Ltd., Minato-ku, Tokyo 107-8324 (JP); OUE, Jutaro, c/o Konami Digital Enternainment Co., Ltd., Minato-ku, Tokyo 107-8324 (JP)
(74) Representative: Rüger, Barthelt & Abel Patentanwälte
(86) International application number: PCT/JP2006/300984
(87) International publication number: WO 2006/080282

(57) **Abstract**

A lighting model storage unit (205) stores therein a lightning model in which a light source is provided to a model body. A parts selection unit (203) reads an outline shape stored in an outline information storage unit (201) and selects a combination of parts to be arranged to the outline shape from the parts images stored in the parts storage unit (202). A map storage unit (204) stores therein a map where the selected parts are arranged to the outline shape. A lightning model applying unit (206) applies a lightning model matching the map. An image drawing section (207) draws a three-dimensional image on the map where the parts are arranged by combining the cooler components from the light source according to the applied lighting model.

## Description

### Technical Field

The present invention relates to an image creating device, light arranging method, recording medium and program which are suitable for automatically creating a three-dimensional image with a greater feeling of reality while reducing a process load.

### Background Art

Conventionally, various games (software or the like) which are executed by a video game device or the like have been developed. Of the games, generally called role playing games are incorrigibly popular and supported by players of a wide range of age groups.
This role playing game is of a type in which a main character (local character) achieves a final goal while being grown in a virtual world (virtual space). For example, the player ventures in virtual space through the main character, battles with an enemy character with whom the player meets on a field or at a dungeon or so to improve the experience point and the capability point of the main character. Then, the player tries to solve a problem with a greater difficulty according to the growth of the main character while collecting items needed and reading a riddle or the like. As the solution of the problem progresses, the identity of the enemy boss character to be a final goal becomes apparent, so that the player beats the enemy boss character to end the adventure.

In such a role playing game, a cave, a palace or the like is generally expressed as a dungeon (maze or the like). In the dungeon, the player often meets an enemy character or can acquire a more important item or the like. Accordingly, the player conquers the dungeon to quicken the growth of the main character or acquires an important item to progress the solution of the problem.
Although a type which displays a predetermined map (fixed map with fixed arrangement of a path and various kinds of objects) of such dungeon was typical, a game of a type which automatically creates different maps (random maps) becomes known recently.

As one example of this type of game, the technology of a video game device capable of creating a maze with a complicated shape is disclosed (e.g., see Patent Document 1).
Patent Document 1: Unexamined Japanese Patent Application KOKAI Publication No. 2001-96067 (pp. 6-10, FIG 2)

### Disclosure of Invention

### Problem to be Solved by the Invention

While the aforementioned role playing game is originally displayed two-dimensionally (displayed on a plane), three-dimensional display (stereoscopic display) has been introduced recently. That is, a display with a three-dimensional map is demanded even in a dungeon or the like.
Automatic creation of a three-dimensional map, for example, uses a scheme of arranging previously prepared plural kinds of block images (block images of three-dimensional shapes) at random. The block images to be arranged include, for example, bright images including an outdoor, lamp, bonfire or the like, or dark images of a corner place surrounded by fences or the corner of a room. The block images each have been subjected to adequate lighting (light arrangement), and do not individually seem to be particularly out of place.

Because block images with different lightings are arranged at random after automatic creation, however, the block images as a whole may not seem to be out of place.
If a bright block image and a dark block image are adjacent to each other, for example, not only the lighting difference stands out unnaturally but also the boundary of the block images becomes prominent.

Accordingly, with individual block images preset in a state where no lighting is carried out or where there is no lighting difference, the entire block images or predetermined unit targets (e.g., a room and a passage or the like) may be subjected to lighting again after automatic creation.
However, to adequately arrange a light source with respect to the entire block images and perform a light source process (calculation of the light source) from the direction and intensity or the like of the light source, a very high processing performance (hardware specification or the like) is demanded.
That is, with the process load being too heavy, many kinds of video game devices or the like make it difficult to realize the process.

The present invention has been made to overcome the problem, and it is an object of the invention to provide a program, light arranging method, and image creating device which can automatically create a three-dimensional image with a greater feeling of reality while reducing a process load.

### Means for Solving the Problem

An image creating device according to the first aspect of the invention includes a parts storage unit, a model storage unit, a parts selection unit, a display body storage unit, a model applying unit and an image drawing unit, and is configured as follows.

First, the parts storage unit stores a plurality of parts (e.g., part images of a ground, wall, ceiling and the like) to be elements of a three-dimensional image. The model storage unit stores a lighting model having a light source arranged at a predetermined position of a model body with a predefined shape (e.g., a stereoscopic body or so). The parts selection unit selects a combination of individual parts to be arranged to an outline body with an arbitrary shape (outline shape) from the stored parts.
The display body storage unit stores a display body (e.g., a map) having the selected individual parts arranged to the outline body. The model applying unit applies the lighting model in accordance with the stored display body. The image drawing unit draws a three-dimensional image by combining color components from the light source on the display body having the selected individual parts arranged, based on the applied lighting model.
In this manner, a lighting model whose shape or so is matched with the display body to which individual parts are arranged, and the color components from the light source (influenced colors or the like from the light source) are combined with the display body based on the lighting model. Accordingly, the three-dimensional image to be drawn is subjected to adequate lighting (light arrangement) so that the image as a whole does not seem to be out of place. Because the color components based on the lighting model are merely combined with the entire display body, a troublesome light source process (calculation of the light source) becomes unnecessary.
As a result, it is possible to automatically create a three-dimensional image with a greater feeling of reality while reducing the process load.

The model applying unit may apply the lighting model by deforming the shape of the model body in accordance with the display body, and
the image drawing unit may set colors of individual vertex points of the deformed model body based on the light source to be arranged, and draw a three-dimensional image by combining color components of individual pixels acquired based on the set colors of the individual vertex points, on the display body.

The model applying unit may change at least an arrangement position of the light source, an irradiation direction thereof, and an irradiation intensity thereof as the shape of the model body is changed.

The model storage unit may store a plurality of lighting models having model bodies of different shapes or having light sources to be arranged at different positions, and
the model applying unit may select one lighting model from the lighting models and apply the lighting model to the display body based on arrangement states of the individual parts to be arranged to the display body.

A light arranging method according to the second aspect of the invention uses a parts storage unit (which stores a plurality of parts to be elements of a three-dimensional image), a model storage unit (which stores a lighting model having a light source arranged at a predetermined position of a model body with a predefined shape), and a display body storage unit (which stores a display body having individual parts arranged thereto), includes a parts selection step, a storage step, a model applying step, and an image drawing step, and is configured as follows.

First, in the parts selection step, a combination of individual parts to be arranged to an outline body with an arbitrary shape (outline shape) is selected from the stored parts (e.g., part images of a ground, wall, ceiling and the like). In the storage step, a display body (e.g., a map) having the selected individual parts arranged to the outline body is stored in the display body storage unit. In the model applying step, the lighting model is applied in accordance with the stored display body (e.g., a stereoscopic body or the like). In the image drawing step, a three-dimensional image is drawn by combining color components from the light source on the display body having the selected individual parts arranged, based on the applied lighting model.
In this manner, a lighting model whose shape or so is matched with the display body to which individual parts are arranged, and the color components from the light source (influenced colors or the like from the light source) are combined with the display body based on the lighting model. Accordingly, the three-dimensional image to be drawn is subjected to adequate lighting (light arrangement) so that the image as a whole does not seem to be out of place. Because the color components based on the lighting model are merely combined with the entire display body, a troublesome light source process (calculation of the light source) becomes unnecessary.
As a result, it is possible to automatically create a three-dimensional image with a greater feeling of reality while reducing the process load.

A program according to the third aspect of the invention is configured so as to allow a computer (including a game device) to function as the image creating device.

This program can be recorded in a computer readable information recording medium, such as a compact disk, a flexible disk, a hard disk, a magnetooptical disk, a digital video disk, a magnetic tape or a semiconductor memory.

The program can be distributed and sold, independently of a computer which executes the program, over a computer communication network. The information recording medium can be distributed and sold, independently of the computer.

### Effect of the Invention

According to the present invention, it is possible to automatically create a three-dimensional image with a greater feeling of reality while reducing a process load.

### Brief Description of Drawings

[FIG. 1] An exemplary diagram illustrating the schematic configuration of a typical game device which realizes an image creating device according to an embodiment of the present invention.
[FIG. 2] An exemplary diagram illustrating the schematic configuration of the image creating device according to the embodiment of the invention.
[FIG. 3A] An exemplary diagram showing one example of an outline shape to be stored in an outline information storage unit.
[FIG. 3B] An exemplary diagram showing one example of an outline shape to be stored in an outline information storage unit.
[FIG. 4A] An exemplary diagram showing one example of a part image.
[FIG. 4B] An exemplary diagram showing one example of a part image.
[FIG. 4C] An exemplary diagram showing one example of a part image.
[FIG. 5] An exemplary diagram showing one example of a map where individual part images are arranged.
[FIG. 6] An exemplary diagram showing one example of a lighting model having a light source arranged at a model body.
[FIG. 7A] An exemplary diagram for explaining how a lighting model is applied to a room (map).
[FIG 7B] An exemplary diagram for explaining how a lighting model is applied to a room (map).
[FIG. 7C] An exemplary diagram for explaining how a lighting model is applied to a room (map).
[FIG. 8A] An exemplary diagram for explaining how a lighting model is applied to a long corridor (map).
[FIG. 8B] An exemplary diagram for explaining how a lighting model is applied to a long corridor (map).
[FIG. 8C] An exemplary diagram for explaining how a lighting model is applied to a long corridor (map).
[FIG. 8D] An exemplary diagram for explaining how a lighting model is applied to a long corridor (map).
[FIG. 9A] An exemplary diagram showing one example of color components from a light source.
[FIG. 9B] An exemplary diagram showing one example of a three-dimensional image having color components combined in a map.
[FIG. 10] A flowchart illustrating the flow of an automatic arranging process that is executed by the image creating device.

### Description of Reference Numerals

- 100: game device
- 101: CPU
- 102: ROM
- 103: RAM
- 104: interface
- 105: controller
- 106: external memory
- 107: DVD-ROM drive
- 108: image processor
- 109: sound processor
- 110: NIC
- 200: image creating device
- 201: outline information storage unit
- 202: parts storage unit
- 203: parts selection unit
- 204: map storage unit
- 205: lighting model storage unit
- 206: lighting model applying unit
- 207: image drawing unit

### Best Mode for Carrying Out the Invention

An embodiment of the present invention will be described below. While the following describes an embodiment in which the invention is adapted to a game device for the ease of understanding, the invention can also be adapted to information processing apparatuses, such as various computers, PDA and cellular phone. That is, the embodiment to be described below is given by way of illustration only, and does not limit the scope of the invention. Therefore, those skilled in the art can employ embodiments in which the individual elements or all the elements are replaced with equivalent ones, and which are also encompassed in the scope of the invention.

### (First Embodiment)

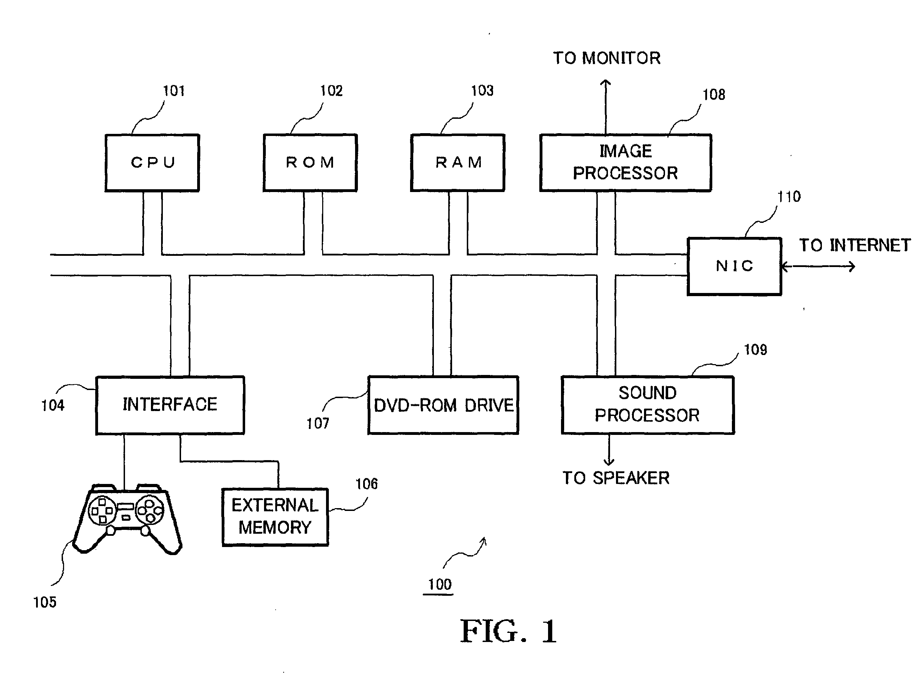

FIG. 1 is an exemplary diagram illustrating the schematic configuration of a typical game device which realizes an image creating device according to the embodiment of the present invention. The following description will be given referring to the diagram.

A game device 100 has a CPU (Central Processing Unit) 101, a ROM (Read Only Memory) 102, a RAM (Random Access Memory) 103, an interface 104, a controller 105, an external memory 106, a DVD (Digital Versatile Disk)-ROM drive 107, an image processor 108, a sound processor 109, an NIC (Network Interface Card) 110.

As a DVD-ROM storing a program and data for a game is loaded into the DVD-ROM drive 107 and the game device 100 is powered on, the program is executed to realize the image creating device of the embodiment.

The CPU 101 controls the general operation of the game device 100, and is connected to individual components to exchange a control signal and data therewith.

An IPL (Initial Program Loader) which is executed immediately after power-on is recorded in the ROM 102. As the IPL is executed, the program recorded in the DVD-ROM is read into the RAM 103 and is executed by the CPU 101. Recorded in the ROM 102 are a program for the operating system needed for the general operational control of the game device 100 and various kinds of data.

The RAM 103 temporarily stores data and a program. The program and data read from the DVD-ROM, and other data needed for progressing a game and chat communication is held in the RAM 103.

The controller 105 connected via the interface 104 accepts an operation input which is made when a user executes the game. For example, the controller 105 accepts an input, such as a string of characters (message), according to the operation input.

Data indicative of the progress status of the game, data of the log (record) of the chat communication and the like are stored in a rewritable manner in the external memory 106 connected detachably via the interface 104. As the user makes an instruction input via the controller 105, those data can adequately be recorded in the external memory 106.

The program for realizing the game and image data and sound data accompanying the game are recorded in the DVD-ROM to be loaded into the DVD-ROM drive 107. Under the control of the CPU 101, the DVD-ROM drive 107 performs a process of reading from the DVD-ROM loaded therein to read a necessary program and data which are temporarily stored in the RAM 103 or the like.

The image processor 108 processes data read from the DVD-ROM by means of the CPU 101 and an image operation processor (not shown) the image processor 108 has, and then records the data in a frame memory (not shown) in the image processor 108. The image information recorded in the frame memory is converted to a video signal at a predetermined synchronous timing, which is in turn output to a monitor (not shown) connected to the image processor 108. This can ensure various image displays.

The image operation processor can enable fast execution of an overlay operation of a two-dimensional image, a transparent operation like α blending, and various kinds of saturate calculations.
It is also possible to enable fast execution of an operation of rendering polygon information which is arranged in virtual three-dimensional space and to which various kinds of texture information is added, by a Z buffer scheme to acquire an rendered image with a downward view of a polygon, arranged in the virtual three-dimensional space, from a predetermined view point position.

Further, as the CPU 101 and the image operation processor cooperate to be able to write a string of characters as a two-dimensional image in the frame memory or on each polygon surface according to font information which defines the shapes of characters. While the font information is recorded in the ROM 102, exclusive font information recorded in the DVD-ROM can be used as well.

The sound processor 109 converts sound data read from the DVD-ROM to an analog sound signal, and outputs the sound signal from a speaker (not shown) connected to the sound processor 109. Under the control of the CPU 101, the sound processor 109 generates effect sounds and music data to be generated during progress of the game, and outputs sounds corresponding thereto from the speaker.

The NIC 110 serves to connect the game device 100 to a computer communication network (not shown), such as the Internet. The NIC 110 includes an analog modem according to the 10 BASE-T/100 BASE-T standard which is used at the time of constructing a LAN (Local Area Network) or to be connected to the Internet using a telephone circuit, an ISDN (Integrated Services Digital Network) modem, an ADSL (Asymmetric Digital Subscriber Line) modem, a cable model to connect to the Internet using a cable television circuit, or the like, and an interface (not shown) which mediates between those modems and the CPU 101.

In addition, the game device 100 may be configured so as to achieve the same functions as the ROM 102, the RAM 103, the external memory 106, and the DVD-ROM or the like which is to be loaded into the DVD-ROM drive 107 by using a large-capacity external storage device, such as a hard disk.
It is also possible to employ a mode of connecting to a keyboard for receiving an edition input of a character string from the user, a mouse or the like for receiving designation of various positions and a selective input therefrom.

An ordinary computer (general-purpose personal computer or the like) can be used as the image creating device in place of the game device 100 of the embodiment. For example, the ordinary computer, like the game device 100, has a CPU, RAM< ROM, DVD-ROM drive and NIC, has an image processor having simpler functions than the game device 100, and can use a flexible disk, magnetooptical disk, a magnetic tape or the like in addition to a hard disk as an external storage device. The keyboard, mouse or the like, not a controller, is used as an input device. As the game program is executed after installation thereof, the computer serves as the image creating device.

### (Schematic Configuration of lmage Creating Device)

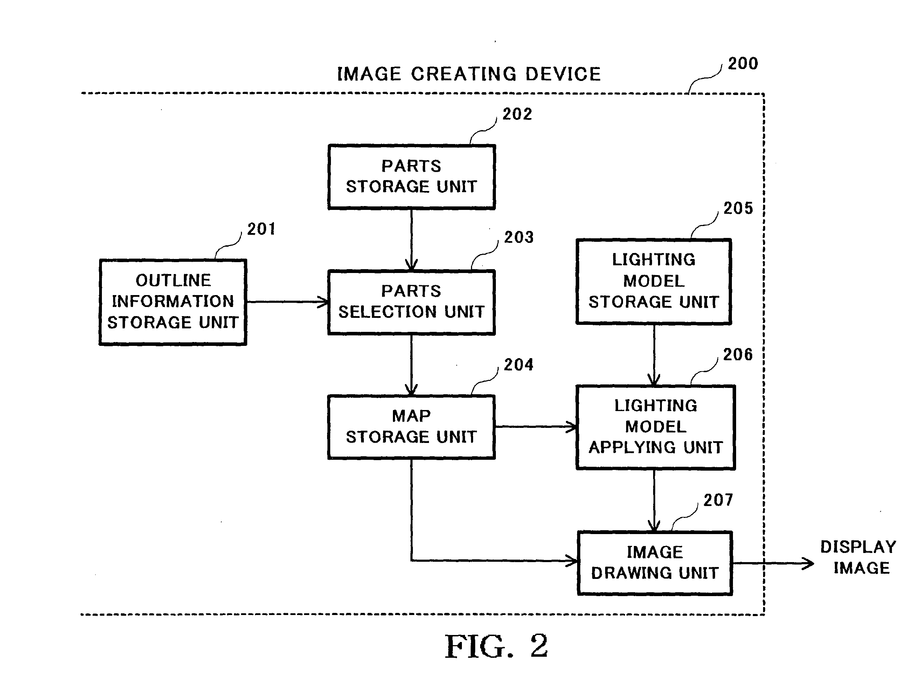

FIG. 2 is an exemplary diagram illustrating the schematic configuration of the image creating device according to the embodiment of the invention. A description will be given below referring to the diagram.

An image creating device 200 has an outline information storage unit 201, a parts storage unit 202, a parts selection unit 203, a map storage unit 204, a lighting model storage unit 205, a lighting model applying unit 206 and an image drawing unit 207.

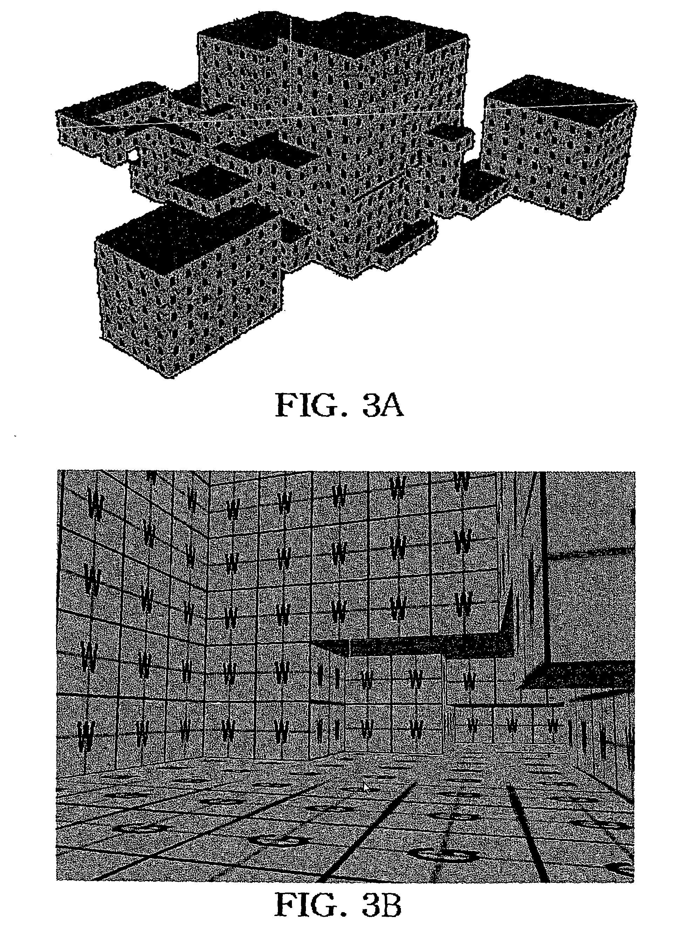

First, the outline information storage unit 201 stores the outline shape of a whole three-dimensional map (whole stage). For example, the outline information storage unit 201 stores an outline shape comprised of multiple types of cells, such as a wall cell, ground cell and a ceiling cell.
Specifically, the outline information storage unit 201 stores an outline shape as shown in FIG. 3A. The interior of the outline shape (inside a room or the like) is comprised of a wall cell (W), a ground cell (G), a ceiling cell (C), etc., as shown in FIG 3B.
The outline shapes shown in FIGS. 3A and 3B are generated by changing an outline shape at a prescribed arrangement by swapping as one example. For example, swapping of selecting every two outline shapes from the prescribed arrangement at random and exchanging them is carried out a predetermined number of times, thereby adequately changing the outline shape.
The RAM 103 can serve as the outline information storage unit 201.

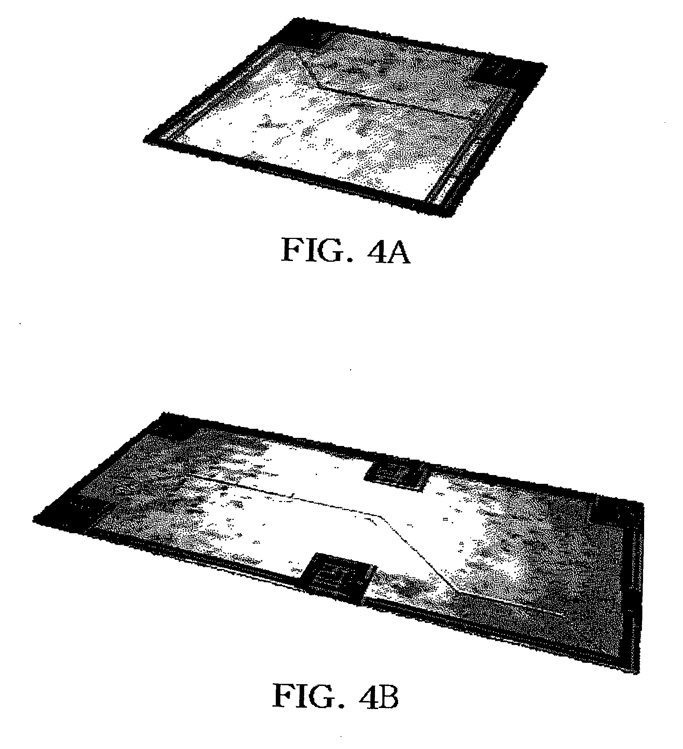

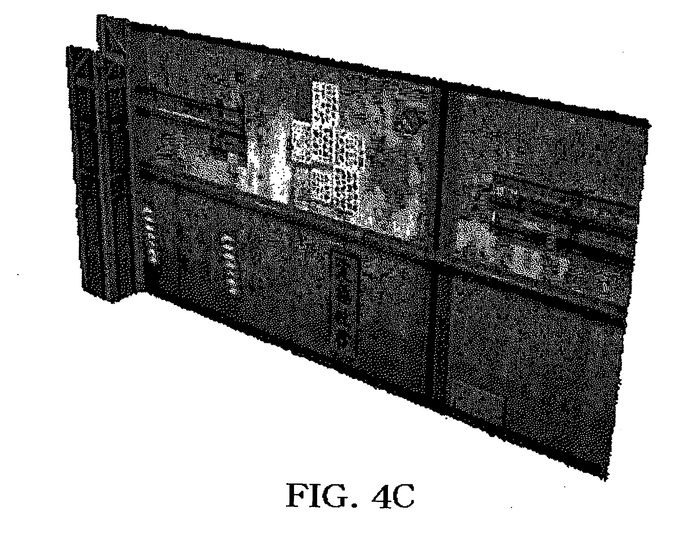

Returning to FIG. 2, the parts storage unit 202 stores a plurality of part images to be elements of a three-dimensional image. That is, the parts storage unit 202 stores plural types of part images to be arranged to individual cells of the outline shape. For example, the parts storage unit 202 stores part images of the ground, wall, ceiling, block, steps, balustrade and shadow.
As an example, the parts storage unit 202 stores part images of the ground, wall, etc. as shown in FIGS. 4A to 4C.. Those part images include one of 1 x 1 (horizontal x vertical) which can be arranged to a single cell as shown in FIG. 4A and one of 2 x 1 (horizontal x vertical) which can be arranged to two cells as shown in FIGS. 4B and 4C.
The DVD-ROM loaded into the DVD-ROM drive 107 or the external memory 106 can serve as the parts storage unit 202.

Returning to FIG. 2, the parts selection unit 203 selects a combination of individual part images to be arranged to individual cells from the parts stored in the parts storage unit 202.
For example, the parts selection unit 203 provides a plurality of candidates while evaluating if they can be arranged to individual cells, based on information or the like which defines a combination pattern of few part images. Then, the parts selection unit 203 selects part images corresponding to the individual cells from the candidates based on a predetermined selection condition.
The parts selection unit 203 stores the part images selected this way into the map storage unit 204.
The CPU 101 can serve as the parts selection unit 203.

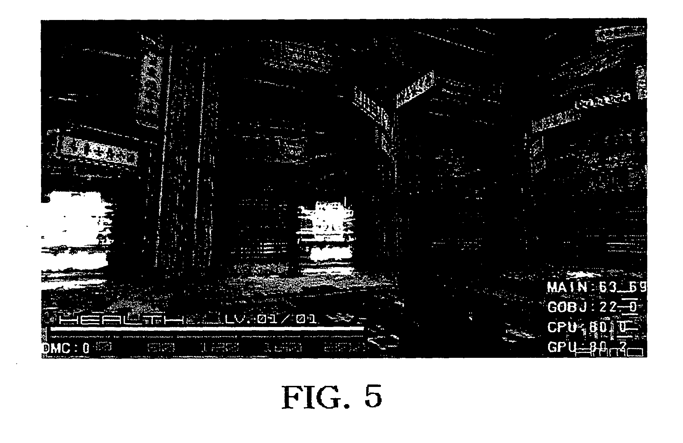

The map storage unit 204 stores a three-dimensional map in which the selected individual map images are arranged in an outline shape. That is, the map storage unit 204 stores a map in which the individual part images selected by the parts selection unit 203 are arranged in an outline shape as shown in FIG. 3B or the like.
Specifically, the map storage unit 204 stores a map (display body) in which individual part images are arranged to individual cells of outline shape as shown in FIG. 5. The map shown in FIG. 5 is a part of the whole part, and represents an alley surrounded by buildings as an example.
The RAM 103 can serve as the map storage unit 204.

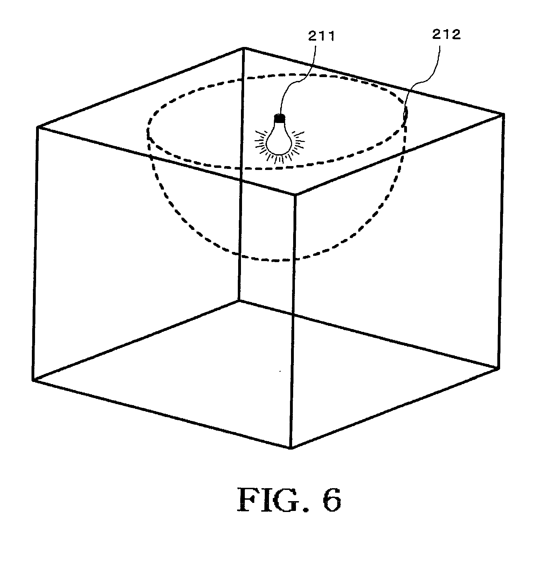

Returning to FIG. 2, the lighting model storage unit 205 stores a plurality of lighting models each having a light source arranged at a model body with a predetermined shape.
For example, the lighting model storage unit 205 stores a lighting model having a light source 211 arranged at a predetermined position of a model body with a stereo shape as shown in FIG. 6. In this case, the light source 211 is, as one example, a point light source whose arrangement position, irradiation direction and irradiation intensity and the like are defined in such a way as to be appear better. That is, as exemplified by a dotted line 212, the range of influence or the like from the light source is determined. The model body is defined as a lighting model corresponding to a room (room or the like with few objects) which has a standard arrangement of individual parts in the aforementioned map.

In addition, the lighting model storage unit 205 stores a plurality of lighting models in association with cases where the arrangement of the individual parts are a room with multiple objects, a long corridor, a corner, a T-intersection, etc. Those lighting models differ from one another, for example, in the shape of the model body or the positions of the light sources to be arranged, the number thereof, or the like.
The DVD-ROM loaded into the DVD-ROM drive 107 or the external memory 106 can serve as the lighting model storage unit 205.

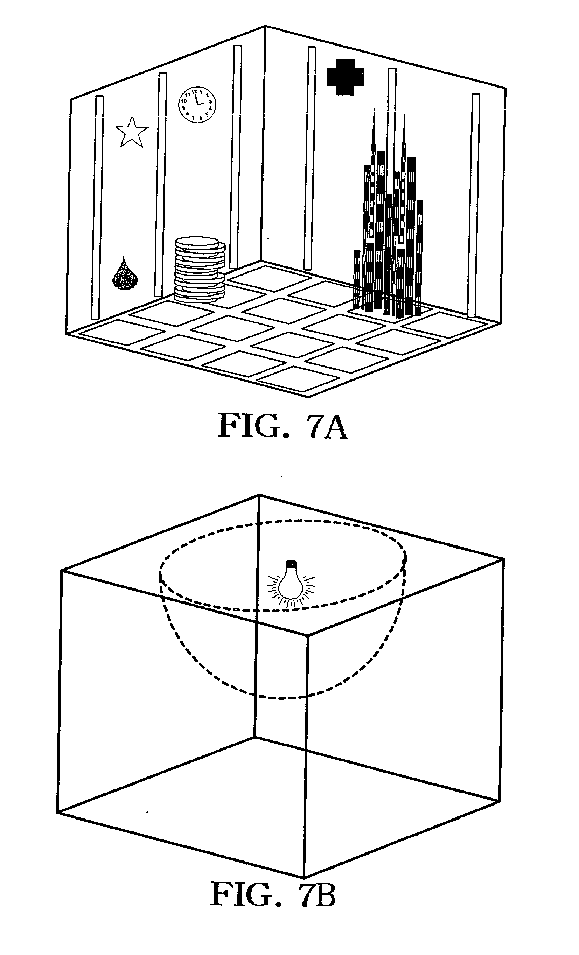

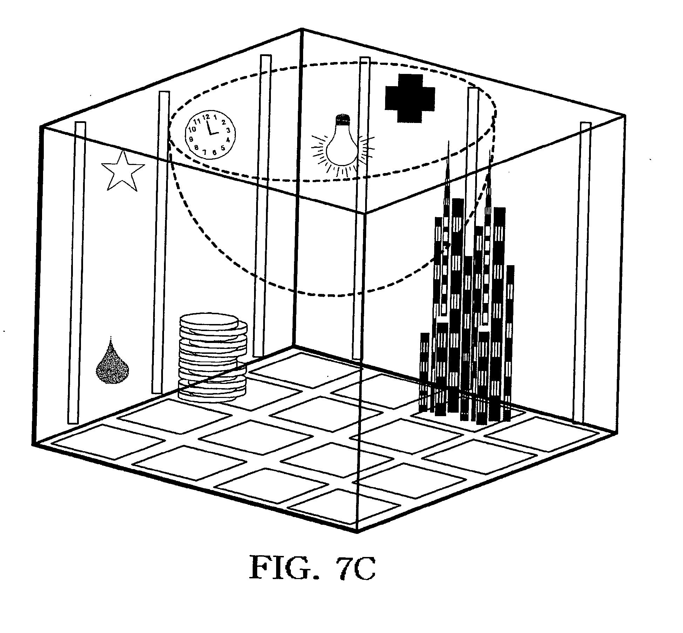

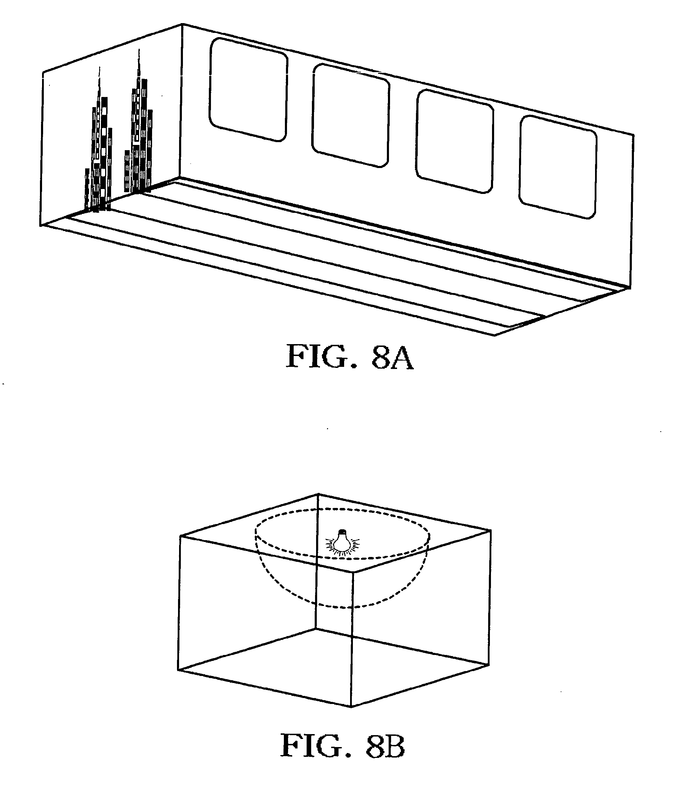

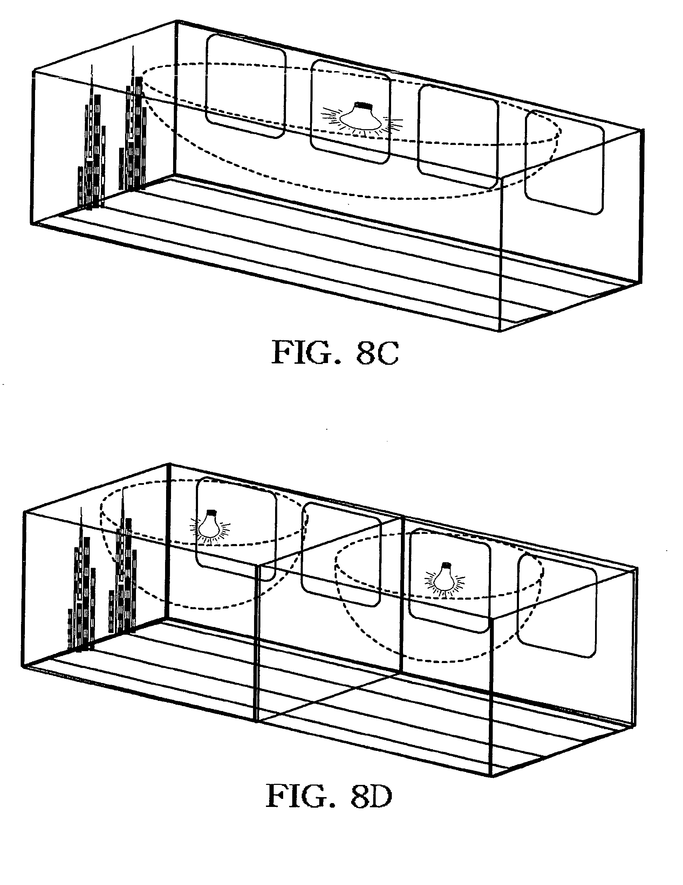

Returning to FIG. 2, the lighting model applying unit 206 adequately applies a lighting model according to the map (area or the like to be displayed).
When a lighting model is applied to a room (map) as shown in FIG. 7A, for example, the lighting model applying unit 206 selects a lighting model (model body) as shown in FIG. 7B from the individual lighting models stored in the lighting model storage unit 205 based on the arrangement states of the individual parts. Then, the lighting model applying unit 206 applies the lighting model by expanding (modifying) the model body as shown in FIG 7C according to the shape of the room.
The expansion adequately changes the arrangement position, irradiation direction, irradiation intensity and the like of the light source.
When a lighting model is applied to a long corridor (map) as shown in FIG. 8A, the lighting model applying unit 206 likewise selects a lighting model (model body) as shown in FIG 8B expands it to a long corridor. In this case, the lighting model applying unit 206 expands two identical model bodies as shown in FIG. 8D for application, not expanding a single model as shown in FIG. 8C. That is, the lighting model applying unit 206 adequately applies a plurality of lighting models when the expansion ratio exceeds a given value or the like.
Although the description has been given of the expansion of a model body by the lighting model applying unit 206 as one example of a case where the model body is smaller than the map, the lighting model applying unit 206 reduces (changes) the model body for application when the model body is greater than the map.
Then, the CPU 101 can serve as the lighting model applying unit 206.

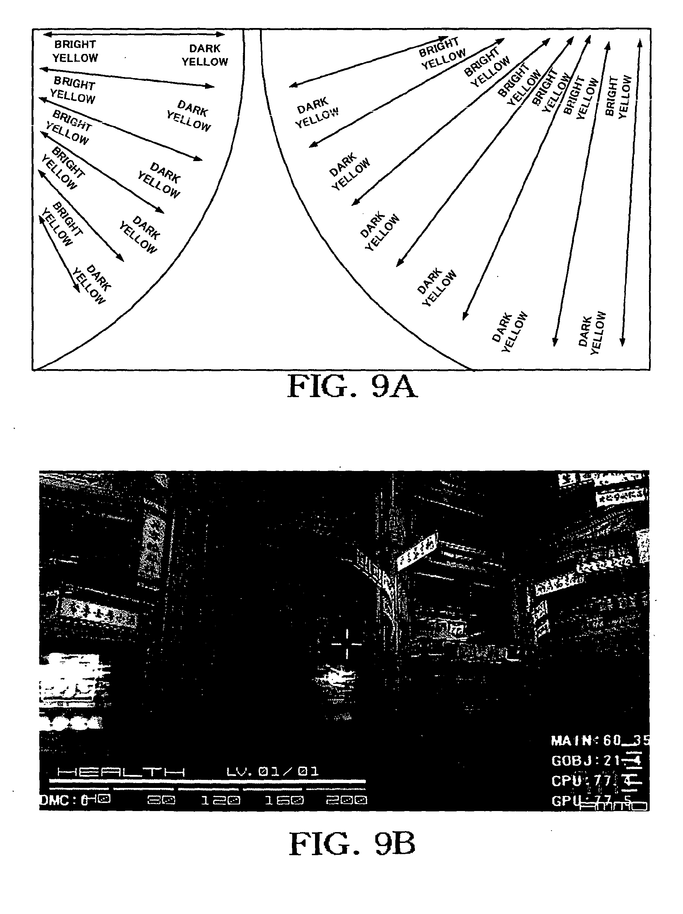

Returning to FIG. 2, the image drawing unit 207 draws a three-dimensional image by combining the color components of the light source with the map having the individual parts arranged, based on the applied lighting model.
For example, the image drawing unit 207 sets the colors of the individual vertexes of the model body undergone expansion or the like (change) based on the light source to be arranged. Then, the image drawing unit 207 draws a three-dimensional image by combining the color components of the individual pixels (colors which are influenced by the light source) acquired based on the set vertex colors with the map.
Specifically, the image drawing unit 207 draws a three-dimensional image as shown in FIG. 9B by combining color components as shown in FIG. 9A (bright yellow to dark yellow in this example) with the map as shown in FIG. 5.
The three-dimensional image as shown in FIG. 9B has the color components from the light source (yellow or the like which is the influential color from the light source) based on the lighting model, so that the three-dimensional image as a whole does not seem to be out of place. The image drawing unit 207 merely combines the color components as shown in FIG. 9A with the map, and can create a three-dimensional image with adequate lighting without performing a tiresome light source process (light source calculation).
The image processor 108 can serve as the image drawing unit 207.

### (Outline of Operation of Image Creating Device)

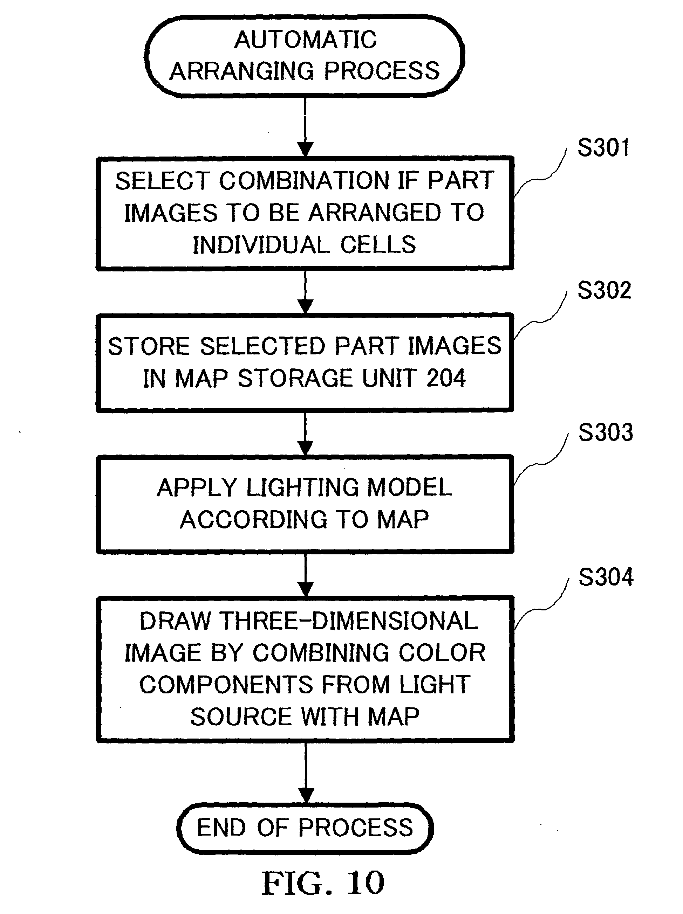

FIG. 10 is a flowchart illustrating the flow of an automatic arranging process that is executed by the image creating device 200. A description will be given below referring to the diagram. The automatic arranging process is initiated, for example, in response to switching of a scene in a role playing game (at the time of entering a dungeon as an example).

First, the parts selection unit 203 reads an outline shape and selects a combination of individual part images to be arranged to individual cells of the outline shape (step S301).
For example, the parts selection unit 203 reads an outline shape comprised of individual cells as shown in FIGS. 3A and 3B from the outline information storage unit 201. The outline shape is modified by swapping or the like so that the shape is not fixed. The parts selection unit 203 selects part images corresponding to the individual cells while evaluating if the individual part images as shown in FIGS. 4A to 4C can be arranged to the individual cells.

The parts selection unit 203 stores the selected part images in the map storage unit 204 (step S302).
Specifically, the map storage unit 204 stores a map having individual part images arranged to individual cells of the outline shape as shown in FIG 5.

The lighting model applying unit 206 adequately applies a lighting model according to the map (step S303).
For example, the lighting model applying unit 206 selects one lighting model from the individual lighting models stored in the lighting model storage unit 205, based on the arrangement states of the individual parts. The lighting model applying unit 206 then applies the lighting model (model body) by adequately expanding (modifying) according to the shape of the map.
That is, the model body is expanded to the shape of the map (room) as shown in FIG. 7C or the like for application. The expansion adequately changes the arrangement position, irradiation direction, irradiation intensity and the like of the light source.

Then, the image drawing unit 207 draws a three-dimensional image by combining the color components of the light source with the map having the individual parts arranged, based on the applied lighting model (step S304).
For example, the image drawing unit 207 sets the colors of the individual vertexes of the expanded model body based on the light source to be arranged. Then, the image drawing unit 207 draws a three-dimensional image by combining the color components of the individual pixels (colors which are influenced by the light source) acquired based on the set vertex colors with the map.
Specifically, the image drawing unit 207 draws a three-dimensional image as shown in FIG. 9B by combining color components as shown in FIG. 9A (bright yellow to dark yellow in this example) with the map.

The automatic arranging process applies a lighting model whose shape is matched with the map to which individual parts are arranged, and combines the color components from the light source (influenced colors or the like from the light source) with the map based on the lighting model. Accordingly, the three-dimensional image to be drawn is subjected to adequate lighting (light arrangement) so that the image as a whole does not seem to be out of place. Because the color components based on the lighting model are merely combined with the map, a troublesome light source process (calculation of the light source) becomes unnecessary.
As a result, it is possible to automatically create a three-dimensional image with a greater feeling of reality while reducing the process load.

### (Another Embodiment)

Although the description of the embodiment has been given of the case where the image drawing unit 207 draws a three-dimensional image by combining color components from a light source with a map where individual part images are arranged, a three-dimensional image may be drawn by combining luminance components or so in addition.

The present invention claims the priority based on Japanese Patent Application No. 2005-017225 the entire contents of which are incorporated herein by reference.

### Industrial Applicability

As described above, the present invention can provide an image creating device, light arranging method, recording medium and program which are suitable for automatically creating a three-dimensional image with a greater feeling of reality while reducing a process load.

## Claims

1. An image creating device comprising:
a parts storage unit that stores a plurality of parts to be elements of a three-dimensional image;
a model storage unit that stores a lighting model having a light source arranged at a predetermined position of a model body with a predefined shape;
a parts selection unit that selects a combination of individual parts to be arranged to an outline shape with an arbitrary shape from the stored parts;
a display object storage unit that stores a display object having the selected individual parts arranged to the outline body;
a model applying unit that applies the lighting model in accordance with the stored display body; and
an image drawing unit that draws a three-dimensional image by combining color components from the light source on the display object having the selected individual parts arranged, based on the applied lighting model.

2. The image creating device according to claim 1, wherein the model applying unit applies the lighting model by deforming the shape of the model body in accordance with the display body, and
the image drawing unit sets colors of individual vertex points of the deformed model body based on the light source to be arranged, and draws a three-dimensional image by combining color components of individual pixels acquired based on the set colors of the individual vertex points, on the display body.

3. The image creating device according to claim 2, wherein the model applying unit changes at least an arrangement position of the light source, an irradiation direction thereof, and an irradiation intensity thereof as the shape of the model body is changed.

4. The image creating device according to any one of claims 1 to 3, wherein the model storage unit stores a plurality of lighting models having model bodies of different shapes or having light sources to be arranged at different positions, and
the model applying unit selects one lighting model from the lighting models and applies the lighting model to the display body based on arrangement states of the individual parts to be arranged to the display body.

5. A light arranging method using a parts storage unit which stores a plurality of parts to be elements of a three-dimensional image, a model storage unit that stores a lighting model having a light source arranged at a predetermined position of a model body with a predefined shape, and a display body storage unit which stores a display body having individual parts arranged thereto, the method comprising:
a parts selection step of selecting a combination of individual parts to be arranged to an outline body with an arbitrary shape from the stored parts;
a storage step of storing a display body having the selected individual parts arranged to the outline body in the display body storage unit;
a model applying step of applying the lighting model in accordance with the stored display body; and
an image drawing step of drawing a three-dimensional image by combining color components from the light source on the display body having the selected individual parts arranged, based on the applied lighting model.

6. A recording medium recording a program that allows a computer to function as:
a parts storage unit that stores a plurality of parts to be elements of a three-dimensional image;
a model storage unit that stores a lighting model having a light source arranged at a predetermined position of a model body with a predefined shape;
a parts selection unit that selects a combination of individual parts to be arranged to an outline body with an arbitrary shape from the stored parts;
a display body storage unit that stores a display body having the selected individual parts arranged to the outline body;
a model applying unit that applies the lighting model in accordance with the stored display body; and
an image drawing unit that draws a three-dimensional image by combining color components from the light source on the display body having the selected individual parts arranged, based on the applied lighting model.

7. A program that allows a computer to function as:
a parts storage unit that stores a plurality of parts to be elements of a three-dimensional image;
a model storage unit that stores a lighting model having a light source arranged at a predetermined position of a model body with a predefined shape;
a parts selection unit that selects a combination of individual parts to be arranged to an outline body with an arbitrary shape from the stored parts;
a display body storage unit that stores a display body having the selected individual parts arranged to the outline body;
a model applying unit that applies the lighting model in accordance with the stored display body; and
an image drawing unit that draws a three-dimensional image by combining color components from the light source on the display body having the selected individual parts arranged, based on the applied lighting model.
